# EUROPEAN PATENT APPLICATION

(11) **EP 0 527 114 A1**
(43) Date of publication of application: **10.02.1993**
(21) Application number: 92830300.7
(22) Date of filing: 09.06.1992
(51) Int. Cl.: B23K 26/08, B23K 37/04

(54) **A laser cutting and/or welding unit**

(30) Priority: 14.06.1991 IT TO910454
(71) Applicant: PRIMA INDUSTRIE S.p.A., I-10121 Torino (IT)
(72) Inventor: Iannarelli, Luigi, I-10154 Torino (IT)
(74) Representative: Gerbino, Angelo

(57) **Abstract**

A laser cutting and/or welding unit includes a machine (20) with a laser focusing head (22) which is movable along three mutually perpendicular axes (X, Y, Z) and a device (24) for loading and unloading workpieces, the device (24) having a pair of piece-holding tables (36, 38) both of which are movable horizontally along the same interchange line (X) between a work station (26) and a station (28) in which the workpieces are loaded and unloaded. The piece-holding tables (36, 38) are intended to move only along the interchange line (X) and are spaced apart vertically (Z) by a distance such that, when a workpiece of a predetermined maximum height (Zm) is on the lower table (36), the lower table (36) can pass beneath the upper table (38). The travel of the focusing head (22) of the machine (20) along the vertical axis (Z) is at least equal to the sum of the vertical distance between two homologous planes of the piece-holding tables (36, 38) and the maximum height (Zm) of the pieces to be worked.

## Description

The present invention relates to a laser cutting and/or welding unit of the type including:
- a machine with a laser focusing head which is movable along two mutually perpendicular horizontal axes and along a vertical axis, and
- a device for loading and unloading the pieces to be worked by the machine, the device including a base structure carrying a pair of horizontal piece-holding tables both of which are movable horizontally along the same interchange line between a working area and an area in which the pieces are loaded and unloaded.

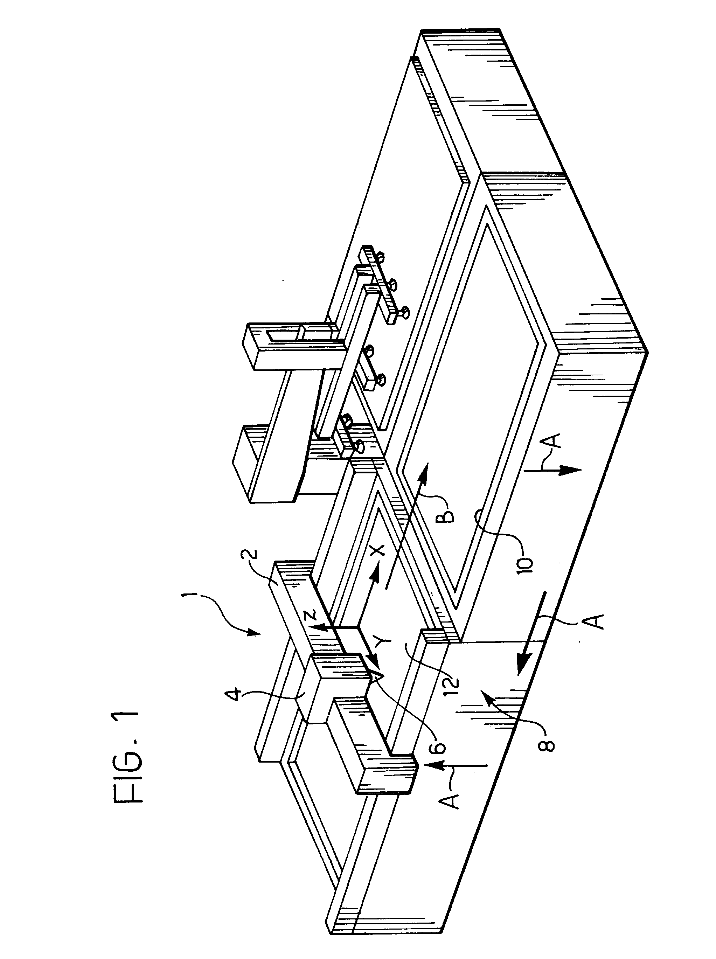

Figure 1 of the appended drawings shows a known unit of the type defined above. The unit shown in Figure 1 represents a typical solution adopted by many constructors of machines of this type. With reference to Figure 1, the machine, indicated 1, includes a main carriage 2 which is movable along a horizontal axis X and on which a central carriage 4 is slidable along a horizontal axis Y perpendicular to the axis along which the main carriage 2 slides. The central carriage 4 carries a laser focusing head 6 which can move along the axis Z usually by a fairly short distance (between 50 and 200 mm). The machine 1 is associated with a loading and unloading device 8 which has two piece-holding tables 10, 12 the positions of which can be interchanged so that the machine 1 can operate on one piece-holding table whilst loading and unloading operations take place on the other table. The two piece-holding tables 10, 12 are disposed at the same level, so that the interchanging of the two tables 10, 12 takes place by means of a downward movement of the piece-holding table 10, a synchronous movement of the tables 10, 12 in opposite directions and, finally, an upward movement of the table 10. In Figure 1, the movements of the piece-holding table 10 are indicated by the arrows A and the movement of the table 12 is indicated by the arrow B. This complex system of movements results from the need to have the two tables 10, 12 at the same working height because of the limited travel of the focusing head 6 along the axis Z. One of the tables thus has to move vertically, in order to prevent interference between the tables along their line of movement.

The known units described above are complex and expensive because of the mechanisms necessary to move one of the piece-holding tables along two perpendicular axes. Moreover, the interchanging of the two piece-holding tables involves a fairly long period of inactivity of the machine, which adversely affects its productivity.

In order to overcome the aforementioned problems, the subject of the present invention is a laser cutting and/or welding unit of the type defined at the beginning, characterised in that the two piece-holding tables are intended to move only along the interchange line and are spaced apart vertically by a distance such that, when a workpiece of a predetermined maximum height is on the table which is at the lower level, the lower table can pass beneath the table which is at the higher level during their relative movement, and in that the vertical travel of the focusing head of the operating machine is at least equal to the sum of the vertical distance between two homologous planes of the piece-holding tables and the maximum height of the pieces to be worked.

By virtue of these characteristics, the tables are interchanged by simple linear movements which can be extremely quick and this reduces the duration of the passive cycle of the machine since the vertical movements for interchanging the tables are eliminated. The unit according to the present invention is also simpler and cheaper than the known unit described above since it does not need the complex mechanisms necessary to move a piece-holding table along two perpendicular axes.

Further characteristics and advantages of the present invention will become clear in the course of the detailed description which follows with reference to the appended drawings, provided purely by way of non-limiting example, in which:
Figure 1, which has already been described above, is a perspective view of a known laser cutting and/or welding unit,
Figure 2 is a schematic, front elevational view of a unit according to the present invention,
Figures 3 and 4 are schematic views taken on the arrows III and IV of Figure 2,
Figure 5 is a side view of the part indicated by the arrow V in Figure 3, on an enlarged scale, and
Figures 6 and 7 are more detailed views of the part indicated by the arrow VI in Figure 5 in two different configurations.

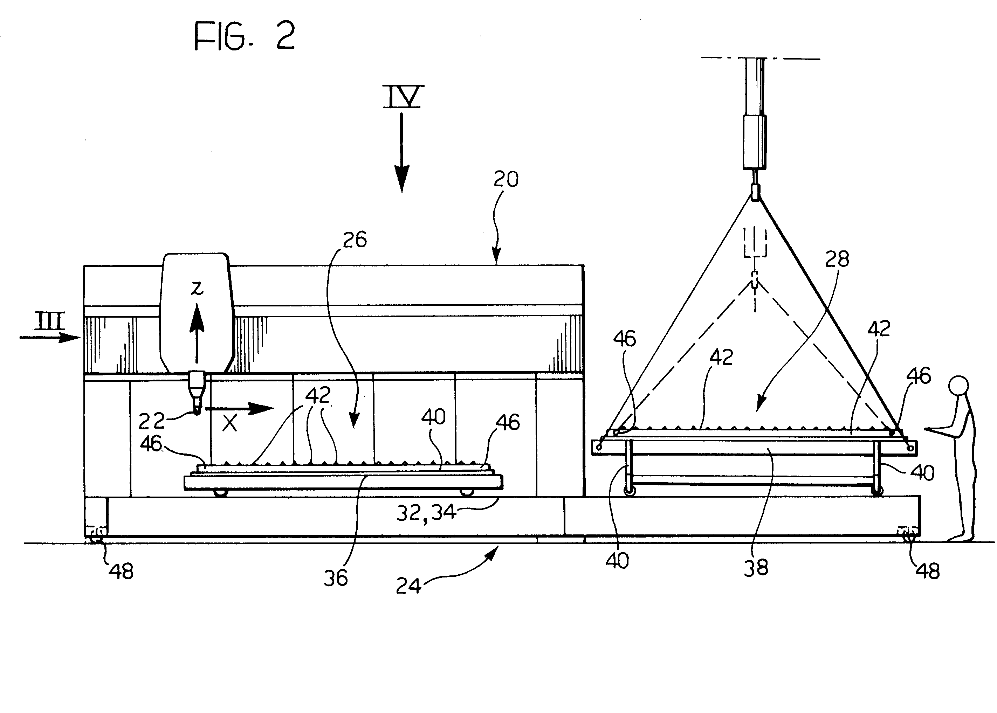

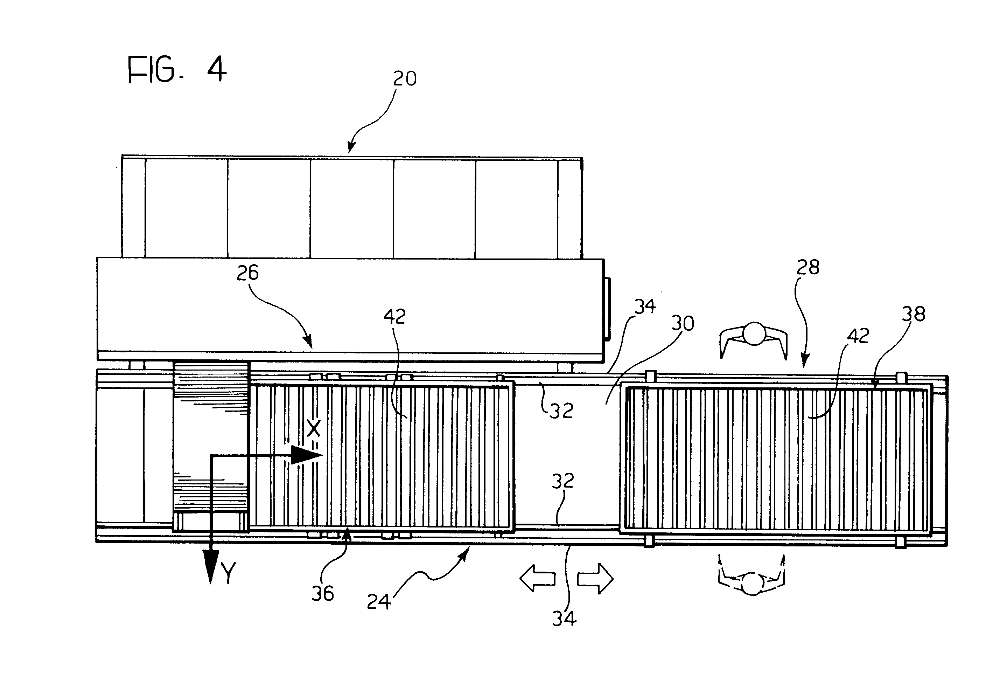

With reference to Figures 2 to 4, a laser machine with cartesian movement is indicated 20 and has a focusing head 22 which is movable along three mutually perpendicular axes indicated X, Y and Z.

The laser machine 20 is associated with a loading and unloading device 24 which extends between a working area 26 in front of the machine 20 and a loading and unloading area 28 beside the machine 20. The loading and unloading device 24 includes a base structure 30 with two pairs of parallel guides 32, 34. A lower piece-holding table 36 is mounted on the inner pair of guides 32 and an upper piece-holding table 38 is mounted on the outer guides 34. The base structure 30 has transmission means (not shown) for moving the tables 36, 38 independently along their respective guides 32, 34. The transmission means may be of any known type (for example, racks, motor-driven chains, or male-and-female screw mechanisms) and are not shown in order to make the drawings easier to understand.

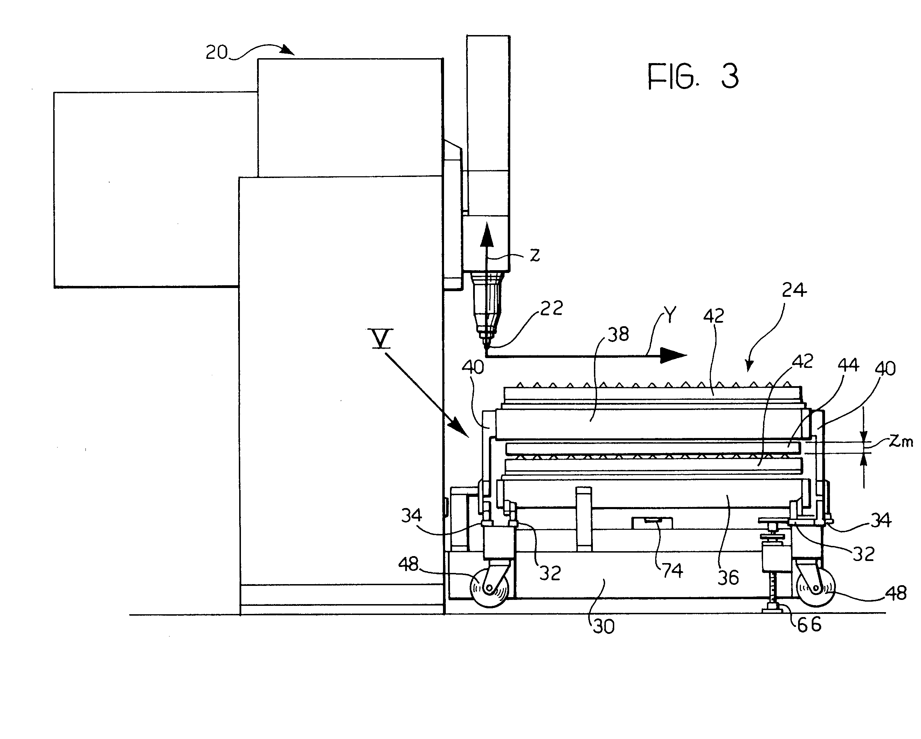

As can be seen in Figure 3, the upper piece-holding table 38 is carried by a portal structure 40 which extends outside the space occupied by the lower table 36 so that the two tables 36, 38 can slide freely throughout the lengths of their guides without interfering with each other.

So that it can operate on pieces carried both by the lower table 36 and by the upper table 38, the travel of the focusing head 22 of the laser machine 20 along the axis Z is equal to the sum of the distance between the upper horizontal planes of the tables 36, 38 and the maximum height, indicated Zm in Figure 3, of the pieces to be worked.

Each piece-holding table 36, 38 carries on its upper surface a support plane 42 on which the piece to be worked by the machine 20 is supported. In the embodiment illustrated in the drawings, the piece is constituted by a body 44 which is fairly flat in shape with a height of less than Zm (Figure 3). The support planes 42 are connected removably to the respective piece-holding tables 36, 38 and can be removed and replaced by different support planes. For this purpose, each support plane 42 has anchoring points 46 by means of which it can be connected to a lifting device, as shown in broken outline in Figure 2. The upper piece-holding table 38 can be removed in the same way so that pieces with heights greater than Zm, for which it is necessary to make use of the entire vertical travel of the machine, can be worked with the use of the lower table 36 alone. In order to allow the upper piece-holding table 38 to be removed, it is necessary to have a system for rapidly disconnecting it from its drive mechanism and from any system carrying electrical cables and/or hydraulic or pneumatic pipes.

In the embodiment shown in the drawings, the base structure 30 has 4 castors 48 which enable the entire loading and unloading device 24 to be moved easily relative to the machine 20 which is fixed firmly to the floor. The loading and unloading device 24 can thus be moved leaving the working area 26 free so that the device 24 can be replaced by another piece-holding device with different characteristics and so that work can be carried out on pieces of shapes or sizes which are not compatible with those of the device 24.

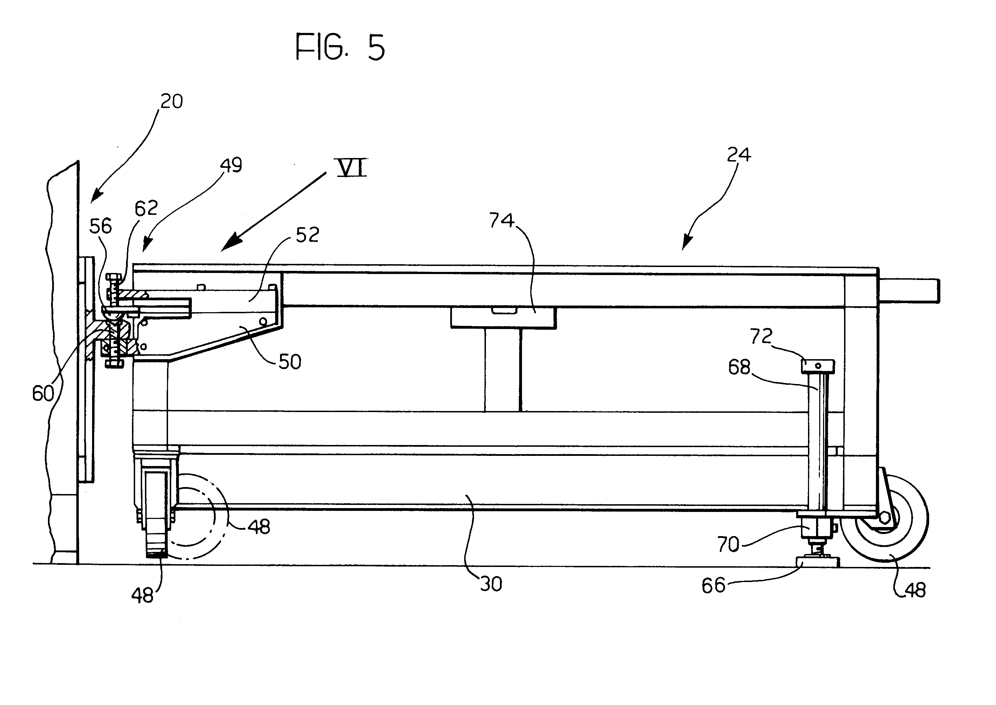

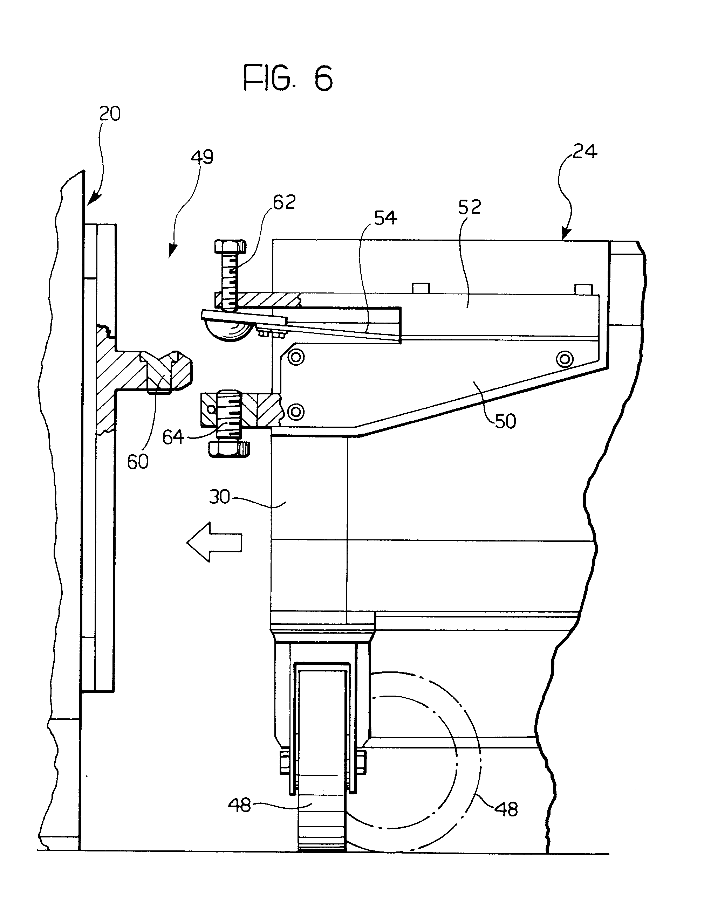

So that the loading and unloading device 24 can be positioned relative to the machine 20 in a highly repeatable manner, the device 24 has a pair of quick-coupling and abutment systems 49, one of which is shown in greater detail in Figures 5, 6 and 7. As can be seen in these drawings, the base structure 30 of the loading and unloading device 24 has a pair of blocks 50, 52 which grip between them a resilient plate 54 one end of which carries a hemispherical abutment member 56. The abutment member 56 is intended to engage a seat 58 in a body 60 fixed to the structure of the machine 20. The upper block 52 carries a screw 62 which, when tightened, acts against the abutment member 56 deforming the resilient plate 54 from its undeformed configuration shown in Figure 6. The lower block 50 has a levelling screw 64 which is intended to act as an abutment against the movable body 60. The adjustment of the screw 64 enables good alignment to be achieved between the device 24 and the machine 20.

In Figure 6, the loading and unloading device 24 is detached from the machine 20 and is supported on the floor by its castors 48. In this configuration, the clamping screw 62 is fully raised so that the abutment member 56 does not interfere with the seat 58.

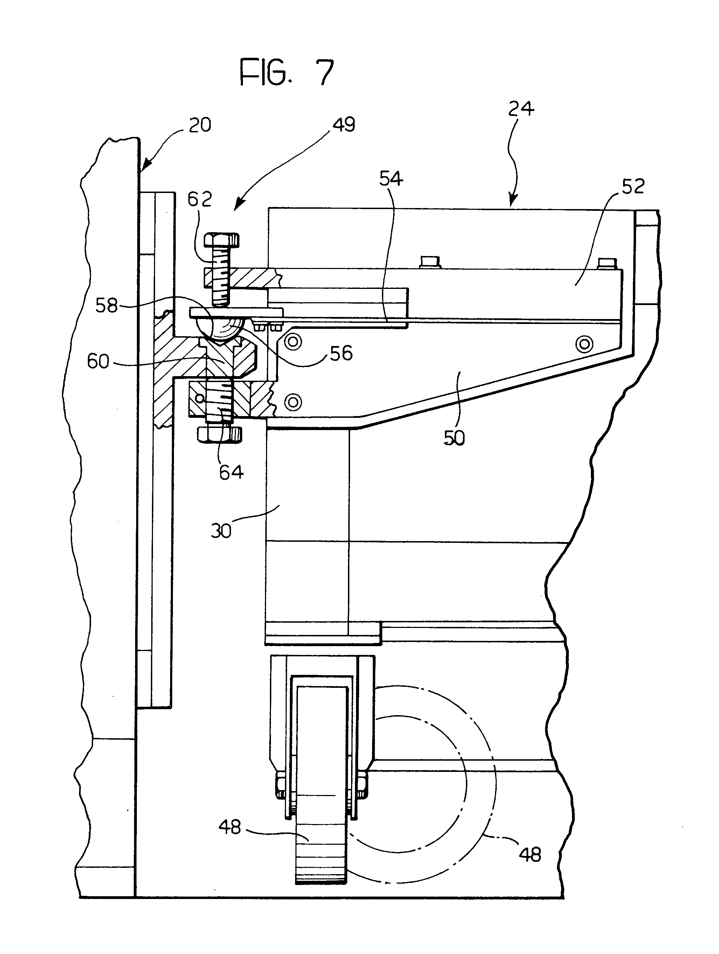

Figure 7 shows the configuration in which the loading and unloading device 24 is connected to the machine 20. In this configuration, the clamping screw 62 urges the abutment member 56 into engagement with the seat 58 and raises the castors 48 on the end of the base structure 30 which faces the machine 20. The levelling screw 64 acts as a stop against the lower portion of the body 60.

The base structure 30 is connected to the machine 20 by means of two fixing systems 49 which are spaced apart on side regions of the machine 20. The seat 58 of one of the fixing systems 49 has a conical profile so as to form a level bidirectional constraint for the abutment member 56. The other fixing system 49, however, has a seat 58 constituted by a V-sectioned groove, the vertex of which is parallel to the straight line joining the centres of the seats 58 of the two fixing systems 49. The V-shaped groove constitutes a unidirectional constraint which compensates for any inaccuracies in construction and/or mounting and for deformation due to thermal expansion.

After the base structure 30 has been connected to the structure of the machine 20 as described with reference to Figures 6 and 7, the planes in which the tables 36 and 38 move are not parallel to the plane X-Y. The structure 30 therefore has means for adjusting the alignment of the piece-holding tables with the axes of the operating machine 20.

In the embodiment illustrated in the drawings, the adjustment means are constituted by a pair of support feet 66 (only one of which is visible in Figures 3 and 5) each carried by a threaded rod 68 which engages a female threaded member 70 fixed to the base structure 30. The level of the base structure 30 is adjusted by the operation of an adjustment hand-wheel 72.

The base structure 30 also has two level-indicator instruments 74 (for example, liquid levels) disposed on the sides of the base structure 30 which are perpendicular to the interchange line X.

In an alternative version (not shown), the loading and unloading device 24 may be disposed below the floor level instead of being movable relative to the machine 20. In this case, the base structure 30, the guides 32, 34 and the devices for moving the piece-holding tables 36, 38 all lie beneath the floor level and only the two piece-holding tables 36, 38 project above it so that the floor in the working area can be walked on. If both the tables 36 and 38 are moved to the loading and unloading area 28, the working area 26 can thus be left completely free so that other operations can be carried out.

The solution shown in the drawings is intended purely by way of non-limiting example and any other arrangement of the loading and unloading device 24 relative to the machine 20 may be adopted. In fact, with a machine 20 of the type illustrated in Figures 2, 3 and 4 (of the so-called arm type), the interchanging of the piece-holding tables 36, 38 could take place along the transverse axis Y instead of along the longitudinal axis X. Moreover, the same loading and unloading device may be used with a portal-type machine such as that shown in Figure 1.

## Claims

1. A laser cutting and/or welding unit including:
- a machine (20) with a laser focusing head (22) which is movable along two mutually perpendicular horizontal axes (X, Y) and along a vertical axis (Z), and
- a device (24) for loading and unloading the pieces worked by the machine (20), the device including a base structure (30) carrying a pair of horizontal piece-holding tables (36, 38) both of which are movable horizontally along the same interchange line (X) between a working area (26) and an area (28) in which the workpieces are loaded and unloaded,
characterised in that the two piece-holding tables (36, 38) are intended to move only along the interchange line (X) and are spaced apart vertically (Z) by a distance such that, when a workpiece of a maximum height (Zm) is on the table (36) which is at the lower level, the lower table (36) can pass beneath the table (38) which is at the higher level during their relative movement, and in that the travel of the focusing head (22) of the machine (20) along the vertical axis (Z) is at least equal to the sum of the vertical distance between two homologous planes of the piece-holding tables (36, 38) and the maximum height (Zm) of the pieces to be worked.

2. A unit according to Claim 1, characterised in that the two piece-holding tables (36, 38) are movable along respective parallel guides (32, 34), the upper table (38) being slidable along guides (34) disposed transversely outwardly of the guides (32) on which the lower table (36) slides and being carried by a portal structure (40) which is outside the transverse space occupied by the lower table (36).

3. A unit according to Claim 1, characterised in that each piece-holding table (36, 38) carries a plane (42) for supporting the piece, the support plane (42) being connected removably to the upper surface of the piece-holding table (36, 38) and being replaceable by a different support plane.

4. A unit according to Claim 2, characterised in that the upper piece-holding table (38) can be removed from the base structure (30) of the loading and unloading device (24).

5. A unit according to Claim 2, characterised in that the guides (32, 34) for the piece-holding tables (36, 38) are beneath the level of the floor which supports the machine (20) so that completely free access to the working area (26) of the machine (20) can be achieved by moving both the piece-holding tables to the loading and unloading area (28).

6. A unit according to Claim 1, characterised in that the base structure (30) of the loading and unloading device (24) is connected to the machine (20) by quick-coupling and abutment means and is movable relative thereto by means of castors (48).

7. A unit according to Claim 6, characterised in that the base structure (30) has means for adjusting the alignment of the piece-holding tables (36, 38) with the axes of movement (X, Y) of the machine.

8. A unit according to Claim 6, characterised in that the coupling means include a pair of hemispherical abutment members (56) which are carried by the base structure (30), and each of which is intended to mate with a respective seat (58) in a body (60) fixed to the structure of the machine (20).

9. A unit according to Claim 8, characterised in that a first seat (58) is conical so as to form a bidirectional level constraint for the respective abutment member (56) and the second seat (58) is constituted by a V-sectioned groove, the vertex of which is parallel to the straight line joining the centres of the two seats (58) so as to form a unidirectional level constraint for the respective abutment member (56).

10. A unit according to Claim 8, characterised in that each abutment member (56) is carried by a resilient element (54) which is adapted to enable the abutment member (56) to move vertically, the abutment member (56) being kept engaged in its seat (58) by a screw (62).

11. A unit according to Claim 10, characterised in that each of the bodies (60) carrying the seats (58) cooperates with a levelling screw (64) which is aligned with and opposes the clamping screw (62).

12. A unit according to Claim 7, characterised in that the means for adjusting the alignment of the piece-holding tables (38) include at least one pair of support feet (66), each of which is carried by a threaded rod (68) which engages a female threaded member (70) fixed to the base structure (30).

13. A unit according to Claim 7, characterised in that the base structure (30) has at least one level-indicator instrument (74).

14. A unit according to Claim 13, characterised in that it includes a pair of liquid levels (74) extending along the axis (Y) and perpendicular to the line (X) along which the tables (36, 38) are interchanged.
